# EUROPEAN PATENT APPLICATION

(11) **EP 1 577 851 A2**
(43) Date of publication of application: **21.09.2005**
(21) Application number: 05005373.5
(22) Date of filing: 11.03.2005
(51) Int. Cl.: G07F 17/32, G06F 3/033

(54) **Gaming machine and program thereof**

(30) Priority: 11.03.2004 JP 2004069469; 11.03.2004 JP 2004069467; 11.03.2004 JP 2004069466; 11.03.2004 JP 2004069468
(71) Applicant: Aruze Corp., Tokyo (JP)
(72) Inventor: Yoshizawa, Kazumasa, Tokyo (JP); Kogo, Junichi, Tokyo (JP)
(74) Representative: Prechtel, Jörg

(57) **Abstract**

A gaming machine of the present invention detects positional information that is inputted, recognizes sign information based on detected positional information, makes comparison between at least one preliminarily stored sign data and recognized sign information to discriminate whether or not the sign information and the sign data are correlated, and executes at least one preliminarily stored game processing associated with the sign data when the sign information and the sign data are correlated.

## Description

### BACKGROUND OF THE INVENTION

### 1. Field of the Invention

The present invention relates to a gaming machine and a program thereof.

### 2. Description of the Related art

In recent years, gaming machines, such as slot machines, computer-games for home use/arcade game use, become widely used. These gaming machines generally include a usual controller (keyboard, mouse, game pad and joy stick etc) each with a plurality of buttons. With a player of the gaming machine manipulates the buttons, associated programs thereof are executed, and an object, for instance a character displayed on a display screen of the gaming machine, is activated based on the manipulation of the player.

Further, the gaming machine may includes a touch panel as a kind of controller which is configured so that a player directly touches a display screen (the touch panel) and a position at which the display screen is touched is detected whereby characters or the like are maniplated depending on the detected position or various operations are performed (as disclosed, for instance, in Japanese Patent Application Laid-Open Publication Nos. 2002-939 and 2001-273460).

However, input operations by using the touch panel is generally used for proceeding the game, and therefore there is no big difference exists between input operations with the touch panel, and input operations with the usual controller such as keyboard or game pad. Thus, even if the gaming machine includes the touch panel type controller, there is no presence of amusing capabilities in such input operations yet.

The present invention has been completed with the above view in mind and has an object to provide a gaming machine and a program thereof that is enabled to have amusing capabilities on input operations per se executed by a player for thereby providing improved amusement of a game.

### SUMMARY OF THE INVENTION

The gaming machine of the present invention features the provision of an input device (touch panel) available for inputting positional information, a positional information acquiring unit (CPU) that acquires positional information inputted from the input device, a sign recognizing unit (CPU) that recognizes sign information based on positional information acquired by the positional information acquiring unit, a sign data storage device (storage device and/or memory) that stores sign data correlated with a certain gaming process, a comparing and discriminating unit (CPU) that makes comparison between sign information, recognized by the sign recognizing unit, and sign data, stored in the sign data storage device and discriminates whether or not sign information and sign data are correlated, and a game processing device (CPU) executing a gaming process associated with sign data.

According to the configuration of the present invention, directly drawing a magic-circle as the sign on a display screen is an input operation. The gaming machine is configured to collate inputted sign and preliminary stored sign data, and in cases where the inputted data and the stored sign data are collated one another based on the predetermined rule, the gaming machine executes a predetermined gaming process which is associated with the stored sign data Thus, the player is able to perform desired gaming process by drawing a predetermined magic-circle (sign). Accordingly, the gaming machine is enabled to have amusing capabilities on input operations per se effectuated by the player on the screen, thereby improving amusement of the game.

### BRIEF DESCRIPTION OF THE SEVERAL VIEWS OF THE DRAWINGS

FIG. 1 is a schematic view illustrating a role playing game system including a gaming machine of a first embodiment according to the present invention.
FIG. 2 is a view illustrating an example screenshot of a role playing game executed in the gaming machine of the first embodiment according to the present invention.
FIG. 3A to 3C are views for illustrating operations of the gaming machine of the first embodiment according to the present invention; FIGS. 3A and 3B show basic operations; and FIG 3C shows a special operation.
FIG. 4 is a block diagram illustrating a schematic structure of the gaming machine of the first embodiment according to the present invention.
FIGS. 5A and 5B are views for illustrating various gaming processes in the gaming machine according to the present invention.
FIGS. 6A and 6B are views for illustrating various gaming processes in the gaming machine of the first embodiment according to the present invention.
FIGS. 7A and 7B are views for illustrating various gaming processes in the gaming machine of the first embodiment according to the present invention.
FIGS. 8A and 8B are views for illustrating various gaming processes in the gaming machine of the first embodiment according to the present invention.
FIGS. 9A and 9B are views for illustrating various gaming processes in the gaming machine of the first embodiment according to the present invention.
FIGS. 10A and 10B are views for illustrating various gaming processes in the gaming machine of the first embodiment according to the present invention.
FIG 11 is a flowchart for illustrating a tapping main process in the gaming machine of the first embodiment according to the present invention.
FIG. 12 is a flowchart for illustrating a tapping process in the gaming machine of the first embodiment according to the present invention.
FIG 13 is a flowchart for illustrating an object tapping process in the gaming machine of the first embodiment according to the present invention.
FIG. 14 is a flowchart for illustrating a magic-circle process in the gaming machine of the first embodiment according to the present invention.
FIG. 15 is a flowchart for illustrating an object indicating process in the gaming machine of the first embodiment according to the present invention.
FIG. 16 is a flowchart for illustrating a magic-circle drawing process in the gaming machine of the first embodiment according to the present invention.
FIG 17A to 17C are flowcharts for illustrating various magic-circle certificate processes in the gaming machine of the first embodiment according to the present invention; FIG 17A is a flowchart for illustrating a first certificate process; FIG. 17B is a flowchart for illustrating a second certificate process; and FIG. 17C is a flowchart for illustrating a third certificate process.
FIGS. 18A to 18C are views for illustrating comparison and discrimination for magic-circle certificate processes in the gaming machine of the first embodiment according to the present invention.
FIG. 19 is a view for illustrating comparison and discrimination for the magic-circle certificate process in the gaming machine of the first embodiment according to the present invention.
FIG. 20 is a flowchart for illustrating a magic-circle activation process in the gaming machine of the first embodiment according to the present invention.
FIG 21 is an outline view of a gaming machine of a second embodiment according to the present invention.
FIG. 22 is a partial cross-sectional view of the gaming machine of the second embodiment according to the present invention.
FIG 23 is a block diagram for illustrating a control system of the gaming machine of the second embodiment according to the present invention.
FIG. 24 is a flowchart for illustrating a first gaming process in the second embodiment according to the present invention.
FIG. 25 is a flowchart for illustrating an winning process in the second embodiment according to the present invention.
FIG. 26 is a flowchart for illustrating a second gaming process in the second embodiment according to the present invention.

### DETAILED DESCRIPTION OF THE INVENTION

### <First Embodiment>

A first embodiment according to the present invention is described in detail with reference to the accompanying drawings. The presently filed embodiment is described below in connection with a case where the present invention is applied to an arcade gaming machine serving as one type of gaming machines.

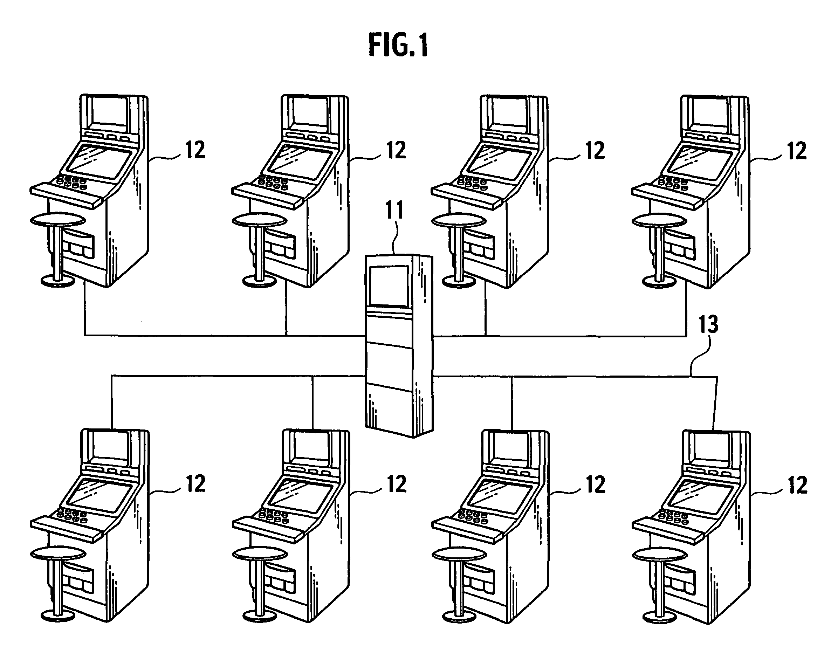

As shown in FIG.1, a system is mainly comprised of a host computer 11, and a plurality of gaming machines 12 connected to the host computer 11 via communication lines 13 such as the Internet and a LAN network. In FIG. 1, there is shown a system wherein eight gaming machines 12 are connected to the host computer 11. The number of gaming machines 12, to be connected to the host computer 11, is not particularly limited. In a role-playing game system with such a structure, a large number of players associated one another are able to participate in play of a role-playing game (hereinafter referred to as RPG) simultaneously.

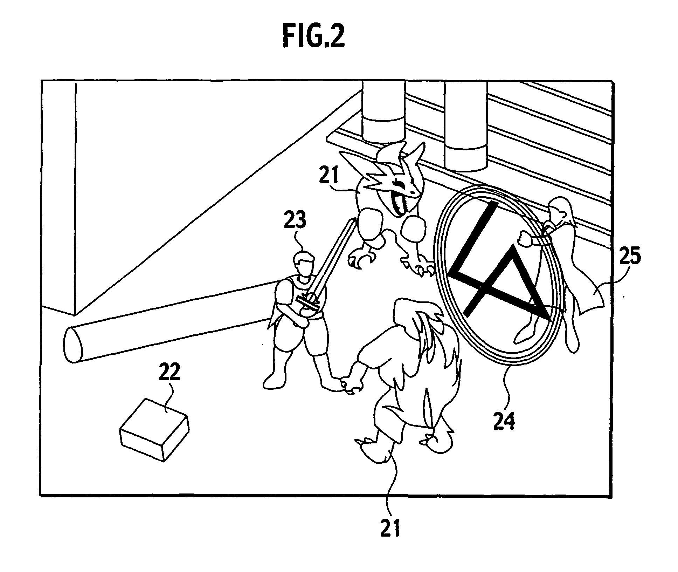

As shown in FIG. 2, with the RPG of the first embodiment, a self-character (avatar) 23 controlled by a player, enemy-character (monsters) 21, non-player-characters 25 simultaneously operated by other associated players on the same location in a virtual-space structured by the gaming system, that is, on the same display screen as that on which the self-character 23 is displayed, and various items 22 such as arms, armors and medicines to be used by the characters 23, 25 on the display screen during a play of the RPG. Meanwhile, examples of the character 25 may include fellow-characters that progress the RPG in association with the self-character 23. Also, with the RPG of the first embodiment, upon drawing a predetermined magic-circle (sign) 24, such as a pentagram, star or other shape, on the display screen of the gaming machine 12, special gaming operation such as, magic attack to the monster, is executed.

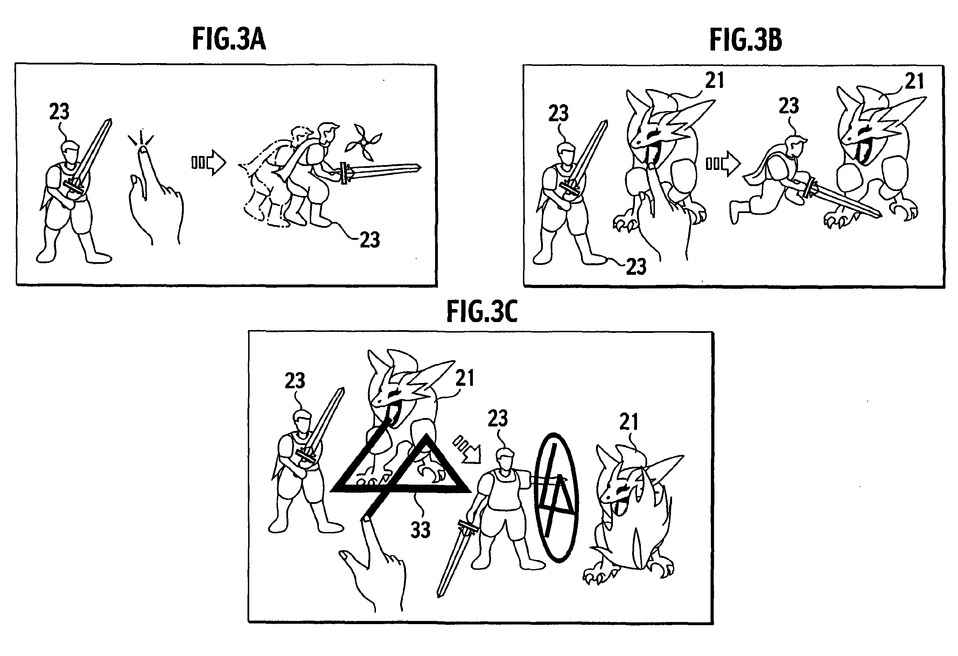

Operations in the RPG include basic operations, shown in FIGS. 3A and 3B, and special operations shown in FIG 3C. More specifically, the basic operations include basic movement, shown in FIG 3A, and basic attack (non-magic attack) shown in FIG 3B. During operation in the basic movement, tapping a point on the display screen close to the point to which the player wishes to move the self-character 23 is desired to move as shown in FIG. 3A. Then, the self-character 23 moves toward tapped direction on a route as short as possible. During operation in the basic attack, the enemy 21, displayed on the display screen, is tapped as shown in FIG 3B. When this takes place, the self-character 23 moves to a position as strategic as possible against the enemy 21 to attack it with a sword or bow.

Examples of special operations may include magic attack as shown in FIG. 3C. Magic attack is practiced upon drawing or tracing a predetermined magic-circle (sign) (or pentagram, stator or other shape) 33 on/vicinity of the enemy 21 displayed over the display screen. This allows the self-character 23 to defeat the enemy 21 using magic (FIG.3C shows a case where fire is summoned upon drawn magic-circle (sign) 33). In such a case, depending on a size of drawn magic-circle (sign), a drawn or traced position on the display screen and a timing at which the magic-circle is drawn or traced on the display screen, magic effects are configured to vary. Also, a concrete gaming process will be described below.

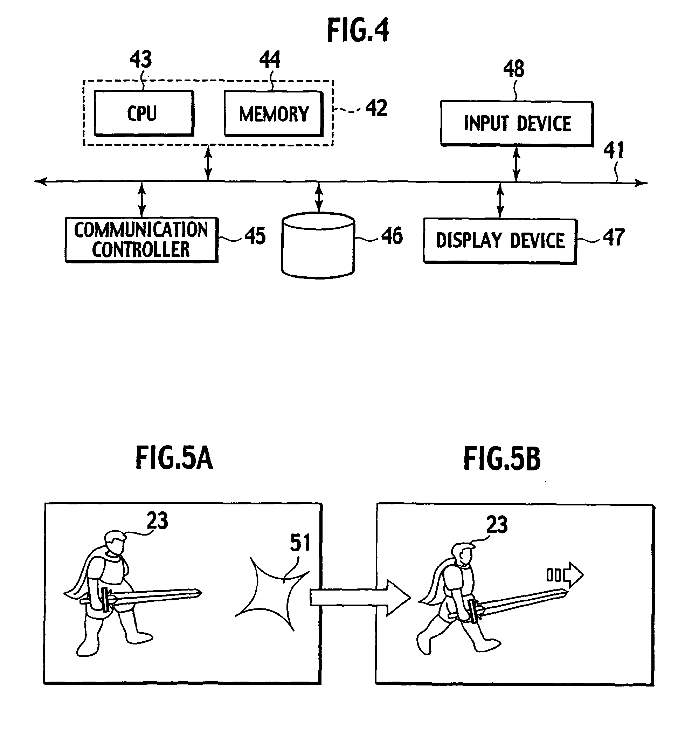

Referring to FIG. 4, the gaming machine 12 is mainly comprised of a processing unit 42 that allows the execution of a variety of gaming processes, a communication controller 45 that achieves communication control between the host computer 11 and the associated gaming machines 12 via the communication lines 13, a storage device (a memory device, such as a hard disc, a RAM or a storage medium read-out device) 46 that stores programs of the RPG, a display device (display means) 47 which includes the display screen of the gaming machine 12 and displays various images of the RPG on the display screen, and an input device (input means) 48 through which an input is made to perform operation. In a case where the gaming machine 12 has a touch panel type input device, the display screen also serves as the input device 48. Hence, in this case, player may controls his self-character 23 by tapping/dragging on the display screen and/or a non-touch panel type input device, such as buttons provided with the gaming machine 12.

The processing unit 42 includes a CPU 43 that controls the gaming processes, and a memory 44 having a volatile memory and/or nonvolatile memory that temporally or permanently retain various data. The CPU 43 serves as a positional information acquiring device, a sign recognizing device, a comparing and discriminating device (selection device), and a game processing device, respectively. Also, the memory 44 and/or the storage device 46 serve as a sign data storage device.

The processing unit 42 is adapted to execute a variety of gaming processes. Examples of the gaming processes may include a step of executing movement and attack (including magic attack), displaying a menu (which is described later), making a shortcut (which is described later), picking up items and touching milestones or the like. It is to be noted that these gaming processes are considered to be of illustrative examples and may be suitably altered depending on kinds of the RPG.

Executing single-tapping on a position one time toward which the self-character 23 is moved on the display screen allows the self-character 23 to be moved (with a tap-icon 51 being displayed) as shown in FIG. 5A. When this takes place, the self-character 23 is moved to that position as shown in FIG 5B. In this case, even if barricades (not shown) are present in an area between the position at which the self-character 23 is currently present and the other position to which the self-character 23 is moved at that time (at which the character is moved), the self-character 23 automatically avoids the barriers while moving towards a target point (tapped point/tapped direction) in the shortest distance.

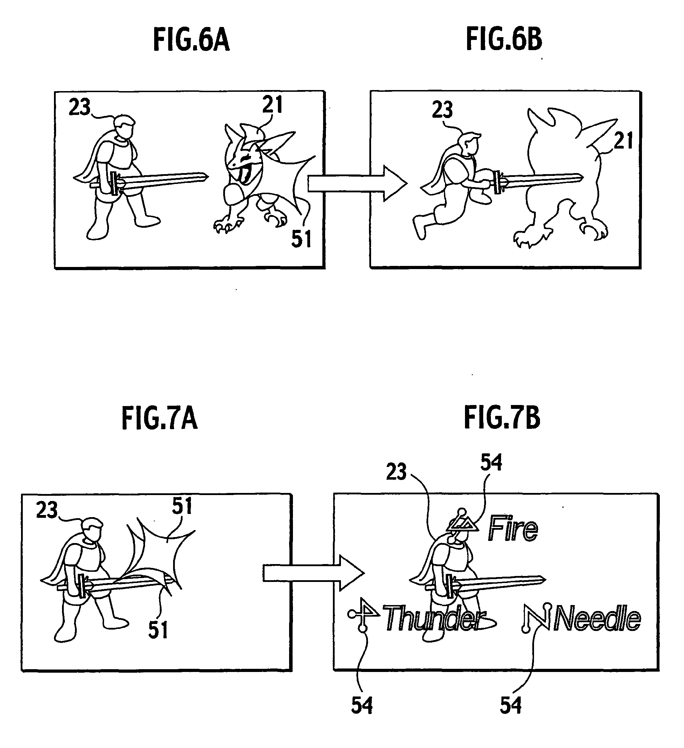

As shown in FIG.6A, during combat-mode (battle-mode), by single-tapping on an object (i.e., enemy 21 or monster, a generator), which is desired to be attacked by the self-character 23 on the display screen, the tap-icon 51 is laid over on the tapped-object 21, and then the self-character 23 moves in an attack distance suitable for attacking the tapped-object 21, thereby attacking the object 21 as shown in FIG. 5B.

By double-tapping an arbitrary position of the display screen, then two laid over tap icons 51 is displayed, and the menu is displayed on the display screen, as shown in FIG. 7A. The menu notifies double-tapped player of the selectable input operations 54 at this time. For instance, the selectable input operations shown upon double-tapping may include magic-circle to summon fire attack, thunder attack and needle attack.

As for player who is familiarity with selectable input operations in each situation, the necessity to notify the player of the selectable input operation is not so high. For such player, the following shortcut operation is useful.

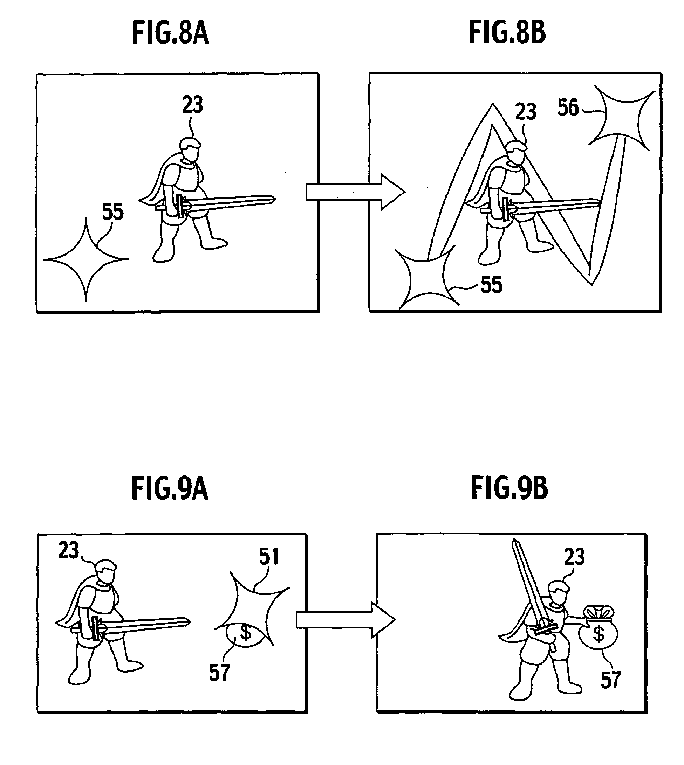

With reference to FIGS. 8A and 8B, the shortcut (special operation set forth above) can be activated upon drawn magic-circle matches with preliminary stored sign data. For instance, as shown in FIG. 8B, drawing one of the shortcuts from a tap-start point 55 to a tap-end point 56 executes a predetermined special operation, such as magic attack. Although the same special operation can be executed by selecting from the displayed menu, however, by drawing the shortcut directly on the display screen, it is possible to quickly execute desired operation without disturbing the progress of the RPG. Meanwhile, the concrete process for the operation will be described beloow.

The operation for picking up the items is executed by single-tapping the item 57 on the display screen (with the tap icon 51 being displayed) as shown in FIG. 9A. Upon single-tapping, the self-character 23 moves toward the item 57 for picking up the item 57 as shown in FIG.9B. Meanwhile, by picking up the item 57, classes of the self-character 23 can be raised. Also, examples of the item 57 may include a mana (a kind of currency which can be used in the RPG), arms and armors.

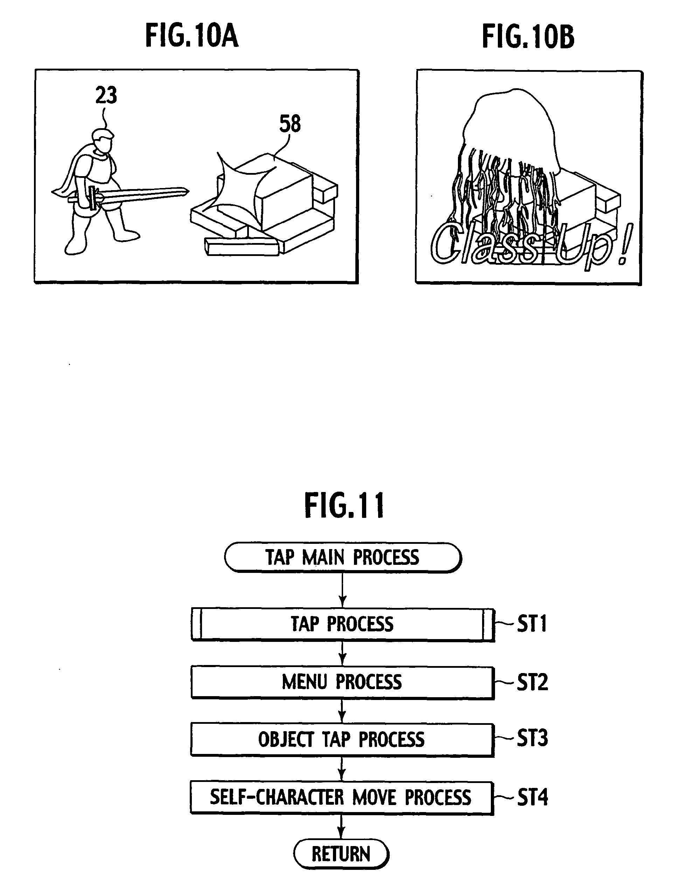

The operation for touching the milestone is practiced by tapping an object that is referred to as a milestone (with the tap-icon 51 being displayed) as shown in FIG 10A. This operation is executed upon picking up and collecting mana dropped in a map displayed on the display screen. Thus, by tapping the milestone 58, the self-character 23 approaches the milestone 58 to automatically cause the mana to be put into the milestone 58. This enables the self-character 23 to be classed up as shown in FIG 10B. Depending on kinds of the collected mana, a parameter of the self-character 23 is increased during the gaming process.

In FIG. 4, the communication controller 45 transfers the gaming process in the RPG to the host computer 11, via the communication line 13, to which the gaming process is transferred from the other gaming machine 12 on which the RPG is practiced. The gaming processes delivered from the other gaming machine(s) 12 is (are) displayed together with the own gaming processes over the display screen, which is controlled by the display device 47. This enables a player to game the RPG together with the other associated players. Also, the communication lines may include the networks such as the Internet and LAN.

The input device (input means) 48 may include a touch panel, a mouse, a track ball, a digitizer, joystick and a motion capture. Particularly, using a contact type input means (touch panel), like a transparent touch panel disposed on the display screen, which allows the player to directly touch the display screen makes it possible to achieve a further simplified special operation, that is, an operation to draw a magic circle, desired by the player, by simply tracing the same with a finger of the player.

The gaming process, to be executed on the gaming machine 12 with the structure mentioned above, is described further in detail with reference to FIG. 11. Also, description is herein made of a case where the input device 48 is comprised of a touch panel.

In step (hereinafter referred to as ST) 1, a player executes a tap process. That is, the player taps on the touch panel (hereinafter merely referred to as "on the display screen") that serves as the input device 48 displayed on the display screen. Upon executing the tap processes, operations are executed for menu process ST2, object tap process ST3 and self-character move process ST4.

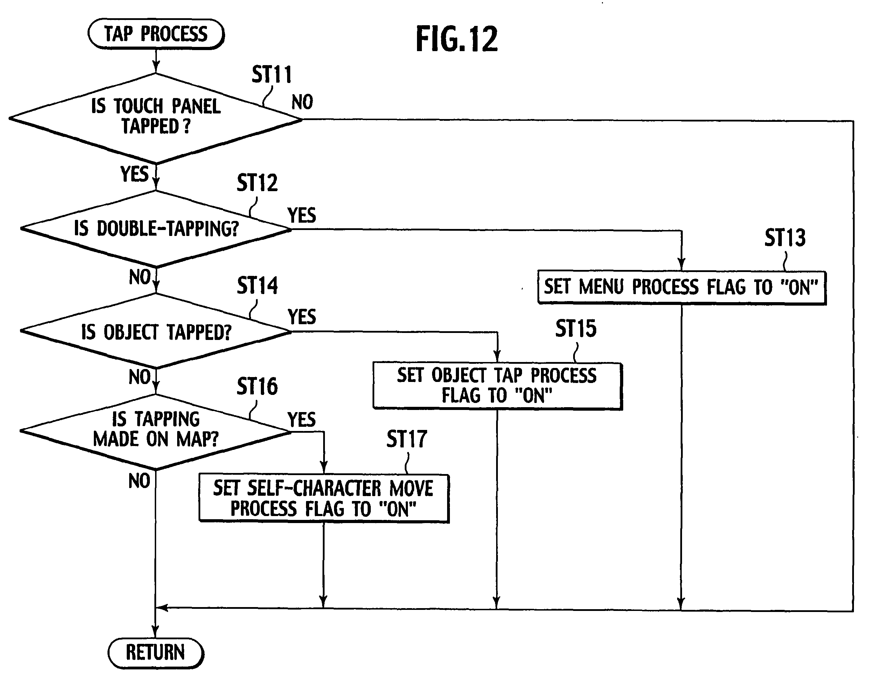

Referring to FIG. 12, during the tap process, depending on a position at which the player taps on the display screen, the menu process, the object tap process or the self-character move process is executed respectively.

First, in ST 11, discrimination is made whether or not the player taps on the display screen, that is, whether or not an input signal is applied to the touch panel. With the tapping is executed, further discrimination is made whether or not the tapping of the player is involved in double-tapping (ST12). If the double-tapping is executed, a menu process flag is set to "ON" (ST13) and a menu is displayed on the display screen as shown in FIG. 7B.

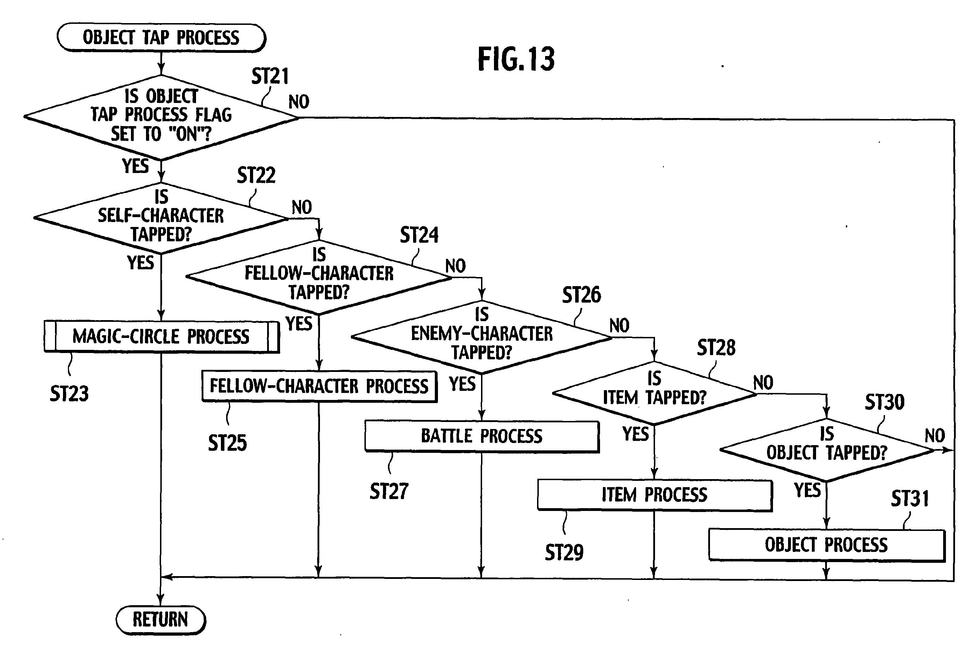

If no double-tapping is executed, discrimination is made whether or not the player executes the object tap process (ST14). With the object tap process executed, an object tap process flag is set to "ON" (ST15). The object tap process will be described later with reference to FIG. 13.

With no object tap process executed, discrimination is made whether or not the player taps on the map (ST16). If the map is tapped, a self-character move process flag is set to "ON" (ST17). Also, although the operations are described in FIG. 12 in an order wherein discriminations are made on the double-tapping, object tap and tapping on the map, the present invention is not limited to such an order and the order in which discriminations are executed on the double-tapping, object tap and tapping on the map may be configured to be different from that of FIG. 12.

Referring to FIG. 13, during the object tap process, depending on a position at which the player executes the tapping on the display screen, a magic-circle process, a fellow process, a battle process, an item process or an object process is executed, respectively.

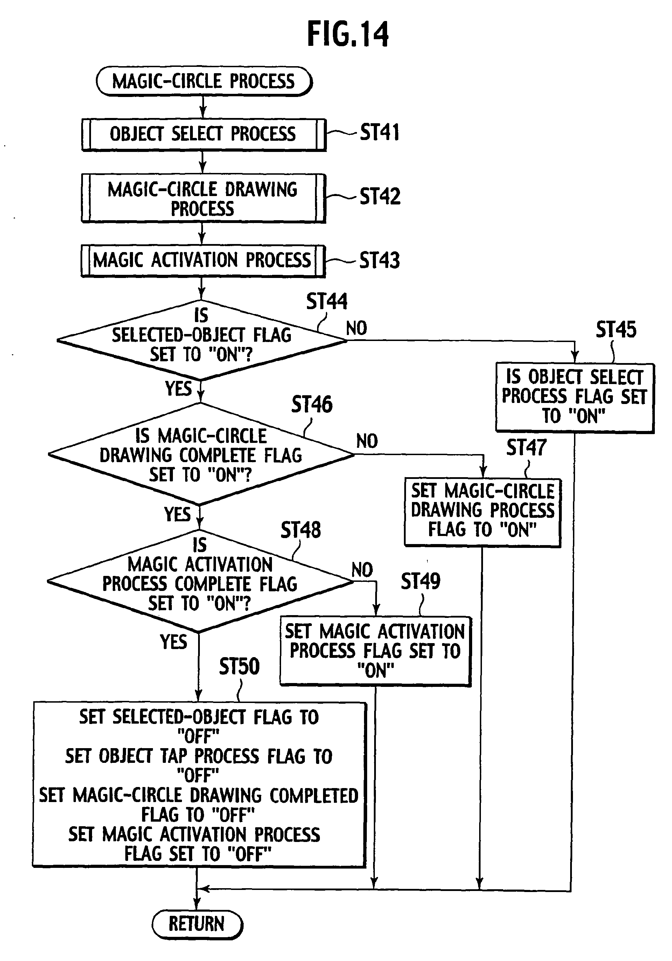

First in ST21, discrimination is made whether or not the object tap process flag is se to "ON". If the object tap process flag is se to "ON", then, discrimination is made whether or not the player taps on the display screen for the self-character 23 (ST22). With the self-character is tapped, the magic-circle process is executed (ST23). The magic-circle process will be described with reference to FIG. 14.

If the self-character is not tapped, discrimination is made whether or not the player taps the fellow-character (ST24). With the fellow-character tapped, the fellow-character process is executed (ST25).

If the fellow-character is not tapped, discrimination is made whether or not the player taps the enemy-character (ST26). With the enemy-character is tapped, the battle process is executed as shown in FIGs. 6A, 6B (ST27).

If the enemy-character is not tapped, discrimination is made whether or not the player taps the item (ST28). With the item tapped, the item process is executed leveling up the character or the like as shown in FIGs. 9A, 9B (ST29).

If the item is not tapped, discrimination is made whether or not the player taps the object (for instance, the milestone) (ST30). With the object is tapped, the object process is executed leveling up the characters (self-character and fellow-character) as shown in FIGs. 10A, 10B (ST31).

Also, although the operations are described in FIG. 13 in an order wherein discriminations are made for the self-character tapping, the fellow-character tapping, the enemy-character tapping, the item tapping and the object tapping, the present invention is not limited to such an order and the order in which discriminations are made for the self-character tapping, the fellow-character tapping, the enemy-character tapping, the item tapping and the object tapping may be configured to be different from that of FIG 13. Also, the fellow-character tapping process, the enemy-character tapping process, the item tapping process and the object tapping process are herein omitted to simplify description.

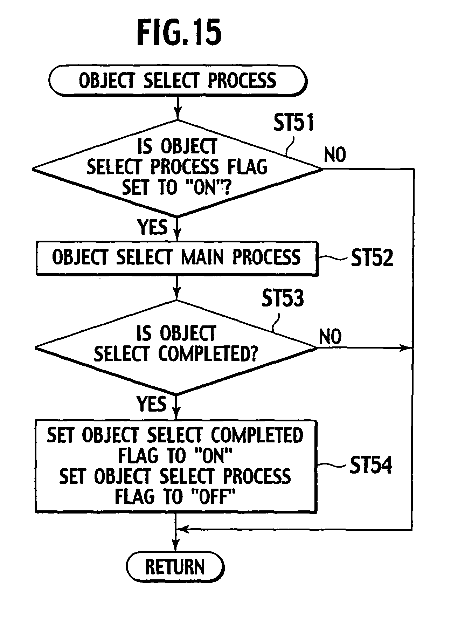

Referring to FIG. 14, in ST41, an object select process is executed for indicating an object on the display screen. The object select process will be described below with reference to FIG 15. After the object has been indicated, a magic-circle drawing process is then executed for specifying a special operation, such as magic attack to be executed for the indicated object (ST42). Thereafter, a magic activation process is executed for practicing the specified magic attack correlated with drawn magic circle (ST43).

In ST44, discrimination is made whether or not a selected-object flag is set to "ON", that is, whether or not the object has been indicated. If the selected-object flag is set to "ON", then, discrimination is made whether or not the drawing of the magic-circle has been completed (ST46). If no selected-object flag is set to "ON", then, the selected-object flag is set to "ON" (ST45).

If the magic-circle drawing flag is set to "ON", then, discrimination is made whether or not a magic attack process flag is set to "ON", that is, whether or not the magic activation process is completed (ST48). If no magic-circle drawing flag is set to "ON", then, the magic-circle drawing flag is set to "ON" (ST47).

If the magic activation process flag is set to "ON"; the object tap process flag is set to "OFF"; the selected-object flag is set to "OFF"; the magic-circle drawing completed flag is set to "OFF"; and the magic activation process completed flag is set to "OFF" (ST50). That is, the object tap process is reset. If no magic activation process completed flag is set to "ON", then, the magic activation process completed flag is set to "ON" (ST49).

The magic-circle process, set forth above, is executed upon indicating the object, drawing the magic-circle and activating the indicated magic, such as magic attack. More particularly, after an object (an object, such as an enemy), to which the magic attack is executed, has been indicated, inputted positional (tapped position) information is detected to allow sign (locus of drawn magic-circle) information to be recognized based on positional information detected within a predetermined time interval, upon which comparison is made between at least one sign data, which is preliminarily stored, and recognized sign information to make discrimination whether or not the sign information and the sign data are correlated. This allows the magic-circle drawing process to be executed. Subsequently, with sign information and sign data found to be correlated, at least one preliminarily stored gaming process, associated stored sign data, is executed. This allows the magic activation process to be executed.

That is, the player inputs on the input device 48 drawing a magic-circle. The gaming machine detects sign information based on drawn magic-circle and collates the sign information and stored sign data preliminary associated with a predetermined gaming process (magic-circle drawing process). Then, if the collation is successful, the relevant gaming process is executed (for magic activation process). For this reason, the player is able to execute the gaming process upon drawing a predetermined magic-circle that the player desires. Therefore, it becomes possible for the input operation per se, directly executed by the player on the screen, to have increased amusing capabilities with improved amusement in game.

Hereunder, the object select process, the magic-circle drawing process and the magic activation process will be described further in detail with reference to FIG 15. In ST51, discrimination is made whether or not an object select flag is set to "ON". If the object select flag is set to "ON", an object select main process is executed (ST52). During the object select main process, the operation is executed mainly for specifying a tap object to be processed in the object tap process.

Then, discrimination is made whether or not the object select is completed (ST53) and upon completion of the object select, the object select completed flag is set to "ON" whereas the object select process flag is set to "OFF" (ST54).

Subsequent to the object select process, the magic-circle drawing process is executed. During the magic-circle drawing process, sign information detected based on the magic-circle, drawn by the player within a predetermined time period, and the preliminarily stored sign data are collated. That is, discrimination is made whether or not the player has completed the drawing of an acceptable magic-circle within the predetermined time period, upon which the detected sign information is certified using preliminarily stored sign data.

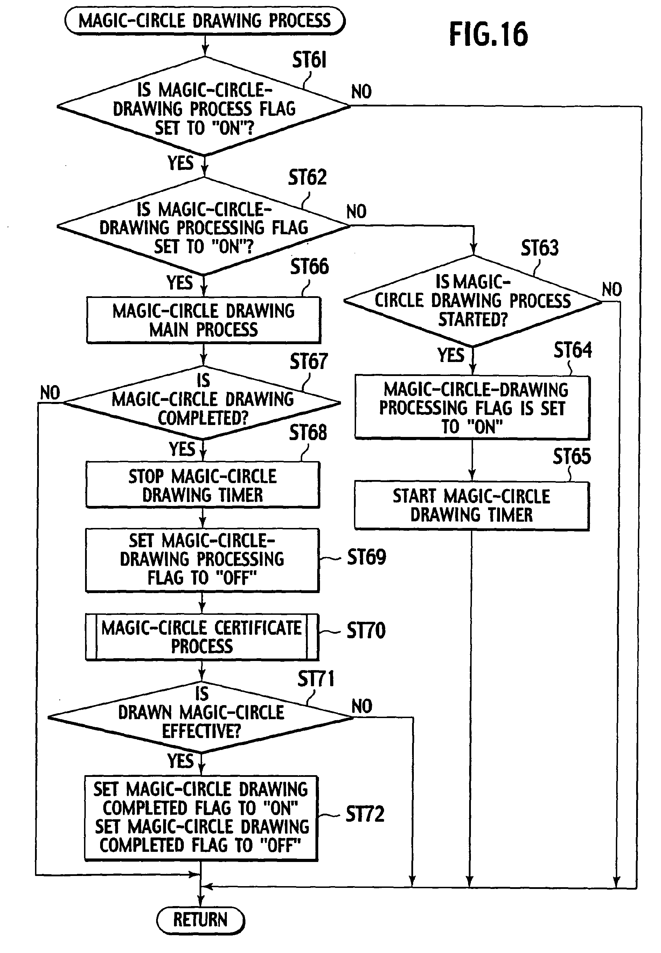

Referring to FIG. 16, in ST61, discrimination is made whether or not the magic-circle drawing process flag is set to "ON". If the magic-circle drawing process flag is set to "ON", then, discrimination is made whether or not the magic-circle drawing process flag is set to "ON" (ST62). If the magic-circle drawing process flag is not set to "ON", discrimination is made whether to start the magic-circle drawing process (ST63).

If the player begins drawing the magic-circle to allow the magic-circle drawing process to be started, a predetermined time period, required for the drawing, is counted. That is, the magic-circle drawing process flag is set to "ON" (ST64), starting a magic-circle drawing timer (ST65). Accordingly, the magic-circle, drawn within the predetermined time period measured by the timer, is used as detected sign information in a magic-circle certificate process that will be described later.

If the magic-circle drawing process flag is set to "ON", since the player is drawing the magic-circle, the magic-circle drawing main process is practiced (ST66). During the magic-circle drawing main process, the operation is executed to detect positional information of the magic-circle inputted by the player. In this moment, sign information based on detected positional information is displayed over the display screen. By so doing, since detected sign information, detected upon drawn magic-circle, is displayed on the screen, the player is able to confirm the sign information displayed on the display screen, which the player is drawing, enabling a desired sign (magic-circle) to be drawn while confirming the same.

Next, discrimination is made whether or not the magic-circle drawing is completed (ST67). If the magic-circle drawing is completed, the timer for the magic-circle drawing is stopped (ST68) and a magic-circle-drawing process flag is set to "OFF" (ST69).

Then, the magic-circle certificate process is practiced using detected sign information (ST70). During the magic-circle certificate process, detected sign information and preliminarily stored sign data are collated. That is, discrimination is made whether or not the magic-circle drawn by the player is acceptable magic-circle (ST71). In particular, sign information, based on positional information detected within the predetermined time period, is recognized and comparison is made between at least one stored sign data and detected (recognized) sign information, thereby discriminating whether or not the sign information and stored sign data are correlated.

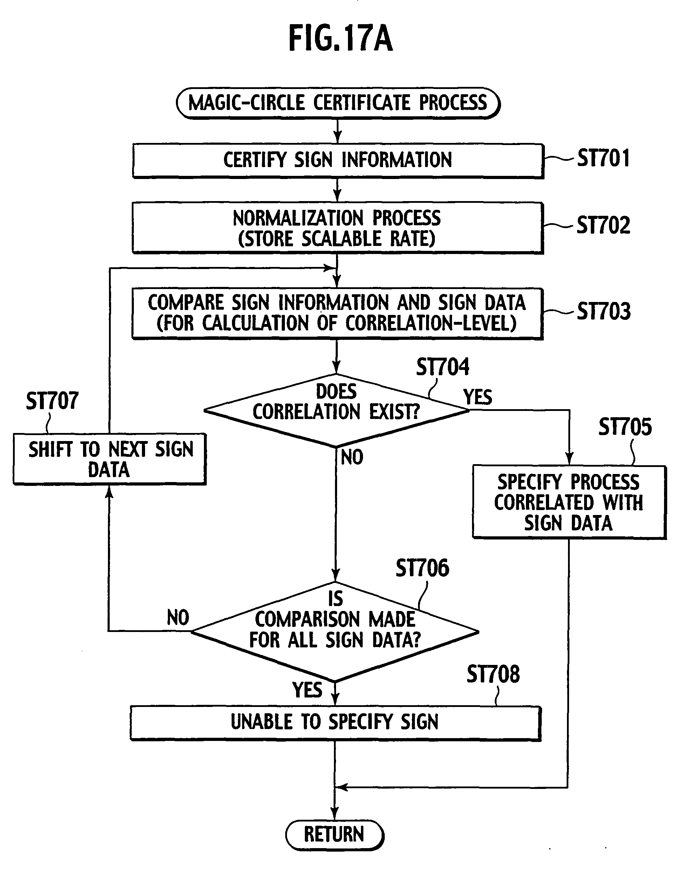

Hereunder, an example of the magic-circle certificate process is described with reference to FIGS. 17A to 17C.

### <First Certificate Process>

The first certificate process, described below, provides fundamentals of second and third certificate processes that will be described later. Also, the first certificate process is assumed that a plurality of sign data is preliminarily stored for permitting certain one gaming process to be practiced.

First, positional information at arbitrary points on the locus (sign) of the magic circle, which the player draws on the touch panel (the input means), is delivered to the CPU 43 every period (for instance, for every 0.05 seconds) and the CPU 43 temporary stores these positional information in the memory 44 that serves as a positional information acquiring device. Positional information is stored in terms of, for instance, an x-y coordinate value or vector data.

First, if the magic-circle certificate process is started, the CPU 43, serving as a sign recognizing device, executes the operation for recognizing/detecting sign information based on positional information temporary stored in the memory 44 (ST701). The CPU 43 (the sign recognizing device) does not necessarily have a need to recognize all positional information, temporary stored in the memory 44 as sign information, and may take the form of a structure wherein some positional information (for instance, only positional information corresponding to proselytized points) among positional information stored in the memory 44 are extracted to allow collected one of extracted positional information to be recognized as sign information.

Subsequently, the CPU 43 executes a normalization process for sign information set forth above (ST702). As used herein, the terminology "normalization process" refers to a conversion process of sign information, that is, a process in which in order to enable comparison between current sign data and subsequent sign data, a size and inclination (rotation) of the sign in sign information are corrected or coordinate values, contained in sign information, are converted to coordinate values that are based on an original point at an arbitrary point (for instance, a start point of the sign). Also, when the operation is executed in a way to alter the size of the sign, an altered value (for instance, at rates of 1.3 times and 0.6 times) indicative of such a size may be stored as a scalable rate. The scalable rate can be used in a magnitude of a subsequent effect or a size in a magic effect graphic display. Also, the scalable rate will be described later in connection with the fourth certificate process.

Then, the CPU 43 (a comparing and discriminating device) reads out stored sign data from the storage device 46 and/or the memory 44, serving as the sign data storage device, making comparison between detected (recognized) sign information and stored sign data (ST703). The CPU 43, serving as the comparing and discriminating device, discriminates based on such comparison whether or not detected sign information and stored sign data are correlated (ST704). As used herein, the term "correlate" refers to a fact that a shape, indicative of detected sign information, has a correlation with a shape, indicative of stored sign data, as a whole. Examples of situations, discriminated to be "correlated", involves not only a case where the shape indicative of detected sign information and the shape indicative of sign data are completely coincident but also a case where these two factors are partly different from each other but coincident to each other as a whole, and in such cases, both factors are treated to be "correlated".

During the first certificate process, a criterion for discriminating whether not the both factors are correlated is judged in terms of a predetermined correlation-level. As used herein, the term "correlation-level" refers to a numeric value indicative of a degree of correspondence between the shape (graphic symbol) indicative of detected sign information and the shape (graphic symbol) indicative of stored sign data. Various methods of calculating the correlation-level may be considered and one example of such methods may include a process in which a plurality of corresponding points are determined in the shape (graphic symbol) indicative of detected sign information and the shape (graphic symbol) indicative of sign data to allow the correlation-level to be calculated using a total sum of the plural points in distance. For instance, in cases where the correlation-level includes a numeric value in which a total sum of the distances of the corresponding points is subtracted from a value of 100 and the shape (graphic symbol) indicative of detected sign information and the shape (graphic symbol) indicative of stored sign data are completely coincident to each other, the correlation-level is expressed as 100-0 = 100. In contrast, in cases where the shape (graphic symbol) indicative of detected sign information and the shape (graphic symbol) indicative of stored sign data are different in part and a total sum of the distances of the corresponding points is 30, the correlation-level is expressed as 100-30 = 70. Thus, the correlation-level between the shape (graphic symbol) indicative of detected sign information and the shape (graphic symbol) indicative of stored sign data is calculated, upon which is discriminated such that if the correlation-level exceeds a threshold value (for instance, 85), then, discrimination is made that there is a correlation between these factors and, in contrast, if the correlation-level is less than the threshold value, discrimination is made that no relevant correlation exists.

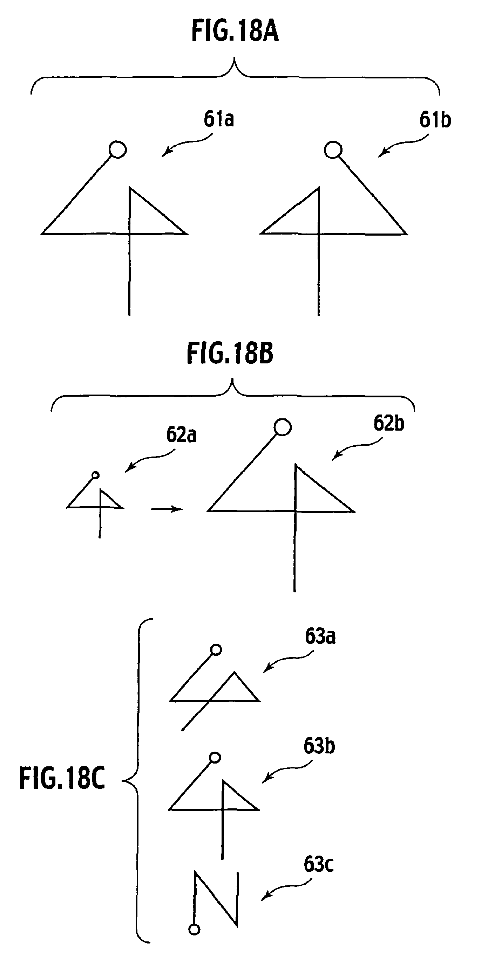

When discriminating whether or not detected sign information and stored sign data are correlated, as shown in FIG. 18A, detected sign information, remaining in a mirror-image relationship, and example stored sign data 61a, 61b are treated as having the correlation. Further, as shown in FIG. 18B, detected sign information, remaining in a similarity relationship, and example stored sign data 62a, 62b may be discriminated to have the correlation. Also, a process for the mirror-image relationship will be described in connection with the third certificate process.

In the exemplary case shown in FIG 18B, detected sign information and stored sign data are compared and discriminated upon practicing the normalization process (ST702). Meanwhile, the scalable rate, obtained in the normalization process, may be reflected on effects of the gaming process (see the fourth certificate process).

When discriminating whether or not detected sign information and stored sign data are correlated, a gaming process, associated with sign information, is selected from at least one stored sign data that is preliminarily stored. At least one stored sign data and a plurality of gaming processes are correlated to one another. Accordingly, a unique gaming process (e.g., magic attack) is executed depending on the magic-circle, which the player has drawn. For instance, as shown in FIG. 18C, if a magic-circle 63a is drawn in a manner, then, the operation is executed to practice magic to allow a fireball to hit a tapped enemy (target); if a magic-circle 63b is drawn, then, the operation is executed to practice magic attack to allow a lightning to hit the tapped enemy (target); and if a magic-circle 63c is drawn, then, the operation is executed to practice magic attack to allow an aculeus to hit the tapped enemy. Practicing such input methods provides improved gaming capabilities for the player to perform input operations directly on the screen. Also, these magic items are not limited to particular examples described above and may be possible to be carried out in appropriate alternatives. Although not described in detail, when practicing the plural processes in the present certificate process, it may be sufficed for the player to draw magic-circles in different input areas on the screen for respective processes. A method of practicing the plural gaming processes on a single input area will be described in detail with reference to the second certificate process.

These stored sign data may have a unique predetermined time period for each stored sign data to be inputted. In such a case, the gaming process may be configured such that in cases where no sign is inputted within the predetermined time period, no process correlated with relevant sign data is executed (for instance, no magic attack is activated based on the magic-circle). Also, stored sign data may include a unique sign quantity for each stored sign data. In such cases, the display screen adapted to display an image of stored sign data depending on the unique predetermined time period during which sign data is inputted. This allows the unique predetermined time period and the unique sign quantity to be provided for each sign data, enabling challenge levels to be provided on magic-circle s to be drawn by the player. For instance, increased challenge levels may be allocated to the magic-circle with increased unique predetermined time period for input and the sign with increased unique sign quantity.

Further, the unique sign quantities may be preferably configured to differ from one another depending on a volume of and/or the number of the proselytized points of the above described sign data. Additionally, the sign quantities can be determined in proportion to a total sum of line segments defined by connecting the proselytized points.

With such a structure, the drawing-levels can be set in fine degrees for the magic-circle to be drawn by the player. For instance, increased drawing-levels can be allocated to sign data along with increasing values of the volume of and/or the number of the proselytized points of the above described sign data.

During the magic activation process (one of a gaming process), the magic activation process may be executed in a way to provide effects that vary depending on the unique predetermined time period and/or the unique sign quantity for the magic-circle to be drawn. More particularly, on the contrary, if the sign is drawn in a large size, as shown in FIG 18B, or when the number of the proselytized points (the number of angles on the magic-circle) increases, the magic activation process (gaming process) may be executed with increased effects. For instance, the fireball may be increased in size to enable an increased damage to be applied to the enemy.

This enables magic to be executed depending on the difficulty level at which the magic-circle is drawn. For instance, a sign drawing with an increased difficulty level may be allocated to magic attack with an increased effect. This allows the player to draw the sign with the increased difficulty level whereby the player is enabled to execute magic with the increased effect. This results in improvement in gaming capabilities for the player to perform the input operations directly on the screen. Meanwhile, above mentioned magic includes, for instance, magic attack to attack tapped enemy character and cure magic to cure the self-character or tapped fellow-character.

When making comparison and discrimination between detected sign information and stored sign data, it may be preferable to discriminate the correlation between at least one specific point of stored sign data and detected sign information. That is, stored sign data is configured to have the specific point for collation and the specific point of the sign data and the specific point of the sign information are collated for comparison and discrimination, whereby finely graded collations can be performed to achieve comparison and discrimination in high precisions.

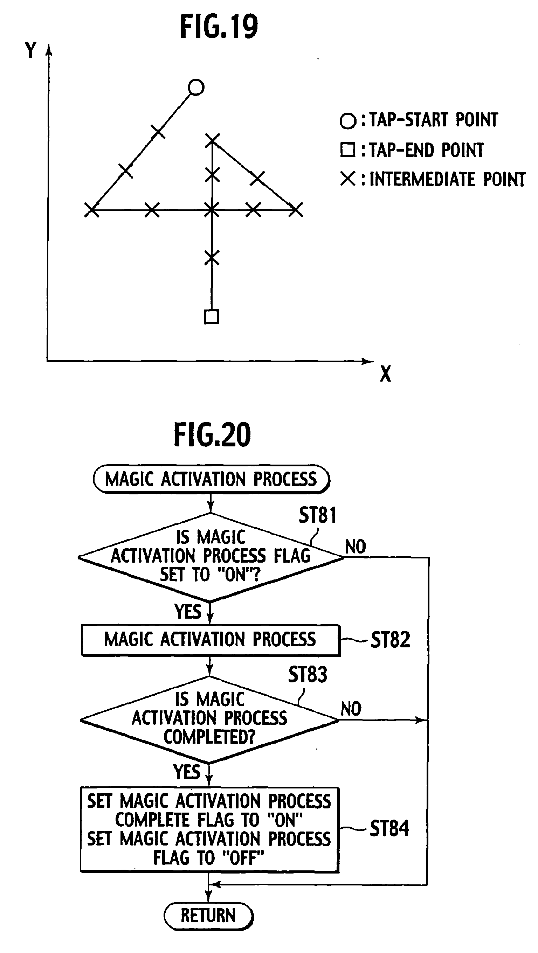

As used herein, the term "specific points" refers to, for instance, a tap-start point, a tap-end point and an intermediate-point as shown in FIG. 19. Relative coordinates on these specific points and orders of the tap-start point/intermediate point/tap-end point are preliminarily stored as sign data, and comparison and discrimination are made between stored sign data and detected sign information. As for sign information in the mirror-image relationship and the similarity relationship, a comparison object can be prepared depending on stored sign data involving the relative coordinates and the orders of the tap-start point/intermediate point/tap-end point.

Turning back to FIG 17A, the first magic-circle certificate process is continuously described.

As a result of comparison process, if it is discriminated that the correlation exists (with "Yes" in ST704), the CPU 43 specifies a process correlated with relevant sign data (ST705). For instance, the CPU 43, serving as a comparing and discriminating device, reads out a process code, stored in correlation with relevant sign data, from the storage device 46 and/or the memory 44, playing a role as a sign data storing device, and operates in a way to deliver the gaming process, correlated with relevant sign data, to the CPU 43 serving as a game processing device.

On the contrary, as a result of comparing operation, if it is discriminated that no correlation exists (with "No" in ST704), the CPU 43 discriminates whether or not comparison between all sign data stored in the storage device 46 and/or the memory 44, playing a role as the sign data storing device, and sign information is completed (ST706). If comparison between all sign data and sign information is not completed (with "No" in ST706), the CPU 43 allows the operation to proceed to next non-compared sign data (ST707) whereupon comparison is made between relevant sign data and sign information (ST703) to make discrimination as to whether or not the correlation exists between two factors. In contrast, if comparison between all sign data and sign information is completed (with "Yes" in ST706), the sign inputted by the player results in no correlation with any stored sign data, and the CPU 43 operates to treat the process as unable to specify the sign (ST708). For the above operations, the magic-circle certificate process is completed and the control process proceeds to ST71 shown in FIG. 16.

Upon certifying the magic-circle in such a way, if the drawn magic-circle is found to be active, the magic-circle drawing complete flag is set to "ON" and the magic-circle drawing process flag is set to "NO" (ST72). Then, the operation proceeds to the magic activation process.

Referring to FIG. 20, in ST81, discrimination is made whether or not the magic activation flag is set to "ON". If the magic activation flag is set to "ON", that is, when the sign (magic-circle) drawn by the player is active, a magic-circle activation main process is executed (ST82).

Since sign data is correlated with the gaming process that is magic, the CPU 43, serving as a game processing device, executes the gaming process associated with certified sign data resulting from the sign (sign information) drawn by the player, providing a display on the screen wherein specific magic (magic attack) is executed on the enemy (in magic activation). Thereafter, discrimination is made whether or not the magic activation process is completed (ST83). Upon completion of the magic activation process, the magic activation process complete flag is set to "ON" and the magic activation process flag is set to "OFF" (ST84).

With the first certificate process, sign information, based on inputted positional information, is recognized/detected and comparison is made between at least one of preliminarily stored sign data and recognized/detected sign information to discriminate whether or not the both factors are correlated whereby when the both factors are found to be correlated, the CPU 43 executes at least one gaming process that is correlated with both sign data and preliminarily stored. This results in a capability for the player to have amusing capabilities on the input operations per se, enabling improvement in amusement effects of the game.

### <Second Certificate Process>

For instance, according to a conventional gaming machine with the touch panel, it is needed that each gaming process is preliminary associated with a corresponding position/area of the display panel (touch panel), respectively. However, the area of the display screen where the gaming process can be allocated is limited. Therefore, as increasing the gaming processes, an entire area of the limited touch panel is fully allocated to respective processes, resulting in a probability with difficulties in allocating further processes. In such cases, there is a method of ensuring one or more areas on the display panel, which can be changed by selecting swich, for allocating new gaming processes. Such a method needs for a player to execute a plurality of control operations with the resultant issues of degradation in operability while the input operations per se given with the amusing capabilities could come to effaced results.

The second certificate process, which will be described below, has an object to enable a desired gaming process to be selected from processes of a large number of kinds for execution without suffering from limitation in a surface area of the display screen (an input region).

Also, since a system structure, by which the second certificate process described below is realized, is identical to the system by which the above-described first certificate process is realized, description of the relevant system structure is herein omitted.

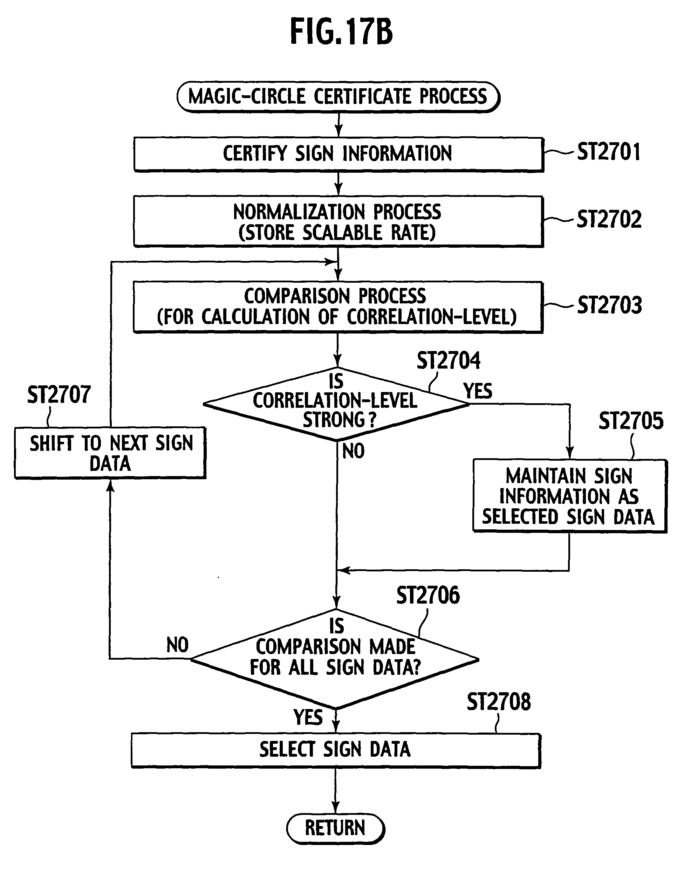

Referring to FIG. 17B, upon executing the comparison process, if sign data (present selected sign data), which is currently subjected to comparison, has a stronger correlation-level than that of correlation-level with sign data that has been already selected (former selected sign data) (with "Yes" in ST2704), the CPU 43 selects relevant sign data (present selected sign data) to be maintained (ST2705). For instance, the CPU 43 (a sign data selecting device) reads out a process code, stored in correlation with selected sign data, from the storage device 46 and/or the memory 44 (the sign data storing device) and operates so as to deliver the process code to the CPU 43 (the game processing device) that executes the process correlated with present selected sign data.

In contrast, upon executing the comparison process, if it is discriminated that currently compared sign data (present selected sign data) has a less correlation-level than that of sign data that has already been selected (former selected sign data) (with "No" in ST2704), the CPU 43 (the sign data selecting device) discriminates whether or not the comparison for all sign data stored in the storage device 46 and/or the memory 44 (the sign data storing device) is completed (ST2706). If all stored sign data is not completely compared (with "No" in ST2706), the CPU 43 allows the operation to proceed to non-compared stored sign data (ST2707), whereupon comparison is made between next stored sign data and sing information (ST2703), making discrimination whether or not present selected sign data has the stronger correlation-level than that of former selected sign data (ST2704). In the meanwhile, if comparison for all stored sign data is completed (with "Yes" in ST2706), the operation is executed to deliver a process correlated with selected sign data to the CPU 43 playing a role as a processing device (ST2708). With such operations discussed above, the magic-circle certificate process is completed and the process control proceeds to ST71 shown in FIG. 16.

Upon certifying the magic-circle in such a way, if the drawn magic-circle is active, the magic-circle drawing complete flag is set to "ON" and the magic-circle drawing process flag is set to "OFF" (FIG.16, ST72). Then, the operation enters the magic activation process. The operations, subsequent to such step, are identical to those of the first certificate process described above and, so, description of the same is herein omitted.

With the second certificate process, even if the process includes the increased number of kinds, a desired process can be selected and executed without suffering from the limitation in the surface area of the input area.

Upon comparison between the first and second certificate processes, the first certificate process includes a case wherein stored sign data aₙ, composed of a plurality of sign data a₁, a₂, ···, aₙ, which permits one associated certain process A to be executed, are exemplified. Thus, these stored sign data a₁, a₂, ···, aₙ perform as an acceptable error range to execute the process A.

In contrast, for a plurality of processes B₁, B₂,···, Bₙ in the second certificate process set forth above, an example is shown which includes only one stored sign data bₙ for allowing each process Bₙ to be executed. Thus, in order to execute the process B₁, there is no other choice but to input an exact magic-circle to be associated with sign data b₁.

Here, it is more preferable for the first and second certificate processes to be combined to make it possible for plural inputs to be made in a sole input area, and for each of a plurality of processes X₁, X₂, ···, Xₙ, a plurality of store sign data, permitting the execution of respective processes, are preliminarily stored such that sign data x₁, x₂, ···, xₙ are stored for the process X₁. With such a configuration, the plurality of processes is inputted in the sole input area with the resultant improvement in operability, while making it possible for the player to enable the inputting in fluctuations. In addition, it becomes possible to allow the magic-circle, under which a certain process is executed, to be freely designed for each player.

### <Third Certificate Process>

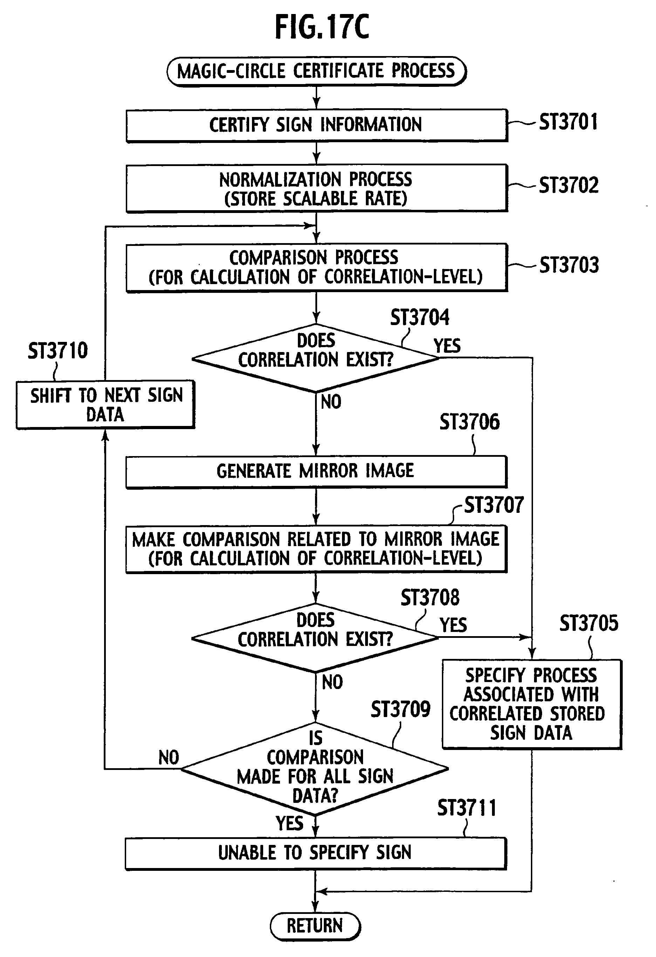

Now, the third certificate process of the first embodiment is described in detail with reference to FIG. 17C. The third certificate process has, in addition to the objects of the first and second certificate processes, an object to provide a possibility of recognizing a magic-circle that is inputted with the nondominant hand of a player.

As a result of the execution of the comparing process, if it is discriminated that inputted sign is correlated with the stored sign data (with "Yes" in ST3704), the CPU 43 specifies a process associated with the correlated stored sign data (ST3705). For instance, the CPU 43 (the comparing and discriminating device) reads out a process code, stored in association with such sign data, from the storage device 46 and/or the memory 44, playing a role as the sign data storing device, and operates so as to deliver the resulting process code to the CPU 43 serving as the game processing device that executes the process associated with such a process code.

On the contrary, as a result of the execution of the comparing process, if discrimination is made that there is no correlation between the inputted sign and the stored data (with "No" in ST3704), the CPU 43 generates a mirror image of the stored sign data (ST3706). Also, in place of generating the mirror image, it doesn't matter if the relevant mirror image is preliminarily stored in the sign data storing device to allow the relevant mirror image to be read out when needed.

Subsequently, the CPU 43 (playing a role as the comparing and discriminating device) makes comparison between sign information recognized upon the inputted positional data and the generated/stored mirror image (ST3707), like the case wherein comparison is made between stored sign data and recognized/detected sign information, to discriminate whether or not these factors are correlated to one another (ST3708). As a result of the execution of comparison process, if it is discriminated that there is the relevant correlation (with "Yes" in ST3708), the CPU 43 specifies a process associated with such correlated sign data (ST3705). For instance, the CPU 43, playing a role as the comparing and discriminating device, reads out a process code, stored in association with the correlated original sign data for generating the mirror image, from the storage device 46 and/or the memory 44 (a role as the sign data storing device) and operates so as to deliver the resulting process code to the CPU 43 (the game processing device) that executes the process associated with such a process code.

On the contrary, if it is discriminated in ST3708 that there is no relevant correlation (with "No" in ST3708), the CPU 43 discriminates whether or not the comparison between all sign data, stored in the storage device 46 and/or the memory 44 (the sign data storing device) and sign information recognized upon the inputted positional information is completed (ST3709). If the comparison between all stored sign data and the sign information is not completed (with "No" in ST3709), the CPU 43 allows the operation to proceed to next non-compared sign data (ST3710) whereupon comparison is made between subsequent sign data/mirror image and the sign information (ST3703/ST3707) to make discrimination as to whether or not there is the relevant correlation (ST3704/ST3708).

In contrast, if the comparison between all stored sign data and recognized/detected sign information is completed (with "Yes" in ST3709), the sign inputted by the player results in no correlation with any stored sign data and generated/stored mirror image, and the CPU 43 operates to treat the process unable to specify drawn magic-circle (ST3711). For the above operations, the magic-circle certificate process is completed and the control process proceeds to ST71 shown in FIG. 16.

With the magic-circle certified in such a way, if the drawn magic-circle is active, the magic-circle drawing complete flag is set to "ON" and the magic-circle drawing process flag is set to "OFF" (ST72). Then, the operation enters the magic activation process. The operations, subsequent to such step, are identical to those of the first certificate process described above and, so, description of the same is herein omitted.

With the input recognizing device and programs of the present invention, even a user, with the dominant hand in either left or right hands, is enabled to easily perform the input operations while permitting the input to be recognized with no drop in recognizing precision.

### <Fourth Certificate Process>

Now, the fourth certificate process for the magic-circle is described in detail. The flow of such a process is identical to that of the first certificate process shown in FIG. 17A but differs in respect of handling the scalable rate in ST702.

In particular, the fourth certificate process may be configured such that the scalable rate and, for instance, the process code by which the process is indicated are delivered to the CPU 43 (the game processing device) upon which the CPU 43 executes the relevant process by multiplying a predetermined reference value (such as, for instance, a damage quantity and a size in magic-effect image) of the process associated with correlated sign data by the scalable rate. The other process is identical to the first process set forth above and description of the same is herein omitted.

With the fourth certificate process, sign information is recognized upon inputted positional information including factors, such as a shape and size of drawn magic-circle, and the comparison step is executed based on such factors, therefore, it becomes possible to indicate the process and the size of the process simultaneously in an easy manner upon execution of single input operation.

The present invention is not limited to the various embodiments set forth above and the present invention may be implemented in a variety of alternatives. For instance, while the embodiments described above have been described with reference to cases where the game includes the arcade game, the present invention is not limited thereto and may be possible to be similarly applied to other RPG. Further, while the embodiments have been described above in conjunction with the case where the input device includes the touch panel, the present invention may similarly have applications to a case where the input device includes an input device other than the touch panel. Also, the gaming machine of the present invention may be of either for the arcade or for a consumer.

Further, although the simulations of the gaming machine of the first embodiment have been treated as the data processing device, the data processing of these simulations may take the form of software. For instance, it may be configured such that a ROM stores a program (that is, involving a procedure for detecting positional information that is inputted; a procedure for recognizing sign information based on inputted positional information that is detected within a predetermined time period; a procedure for making comparison between at least one preliminarily stored sign data and recognized sign information for discriminating whether or not detected/recognized sign information and stored sign data are correlated; and a procedure for executing at least one preliminarily stored gaming process that is correlated to sign data) to allow a CPU to command and operate in accordance with the program. Further, it may be configured such that the program is stored in computer-readable storage medium to allow the data processing program of storage medium to be stored in a RAM of a computer whereby the CPU operates in accordance with the data processing program. In such cases, the presently filed embodiment has the same operation and effects as those of the embodiments set forth above.

Also, while the first embodiments have been described above with reference to an exemplary case where the input content includes the magic-circle, of course, the input content may take the form of various other shapes, such as characters and numerals, which may be inputted and detected.

Hereunder, detailed description is made of a case where the present invention is applied to a slot machine with a touch panel serving as a gaming machine and a game on the slot machine.

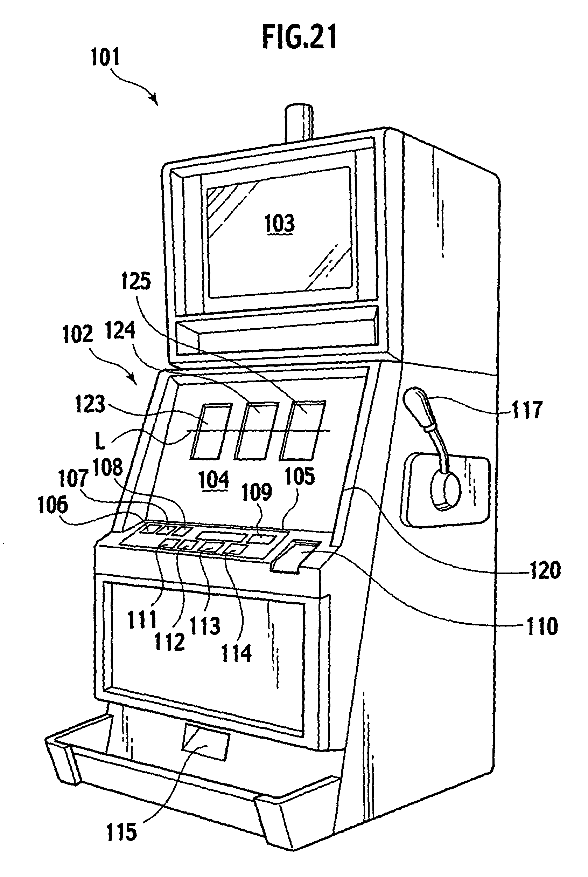

Referring to FIG. 21, the slot machine 101 has a cabinet 102 and further includes an upper LCD (first liquid crystal device) 103 located in an upper area of the cabinet 102, and a lower LCD (second liquid crystal device) 104 located in a lower area of the cabinet 102. Here, the upper LCD 102 includes a commercially and widely used liquid crystal, but the lower LCD 104 takes a structure that includes a so-called transparent LCD adapted to be suitably controlled whereby a player is able to view symbols provided on reels 122 located behind the lower LCD 104. Also, disposed below the lower LCD 104 are a control panel 105, equipped with various control buttons, and a start lever 117 mounted on the cabinet 102 at one side thereof.

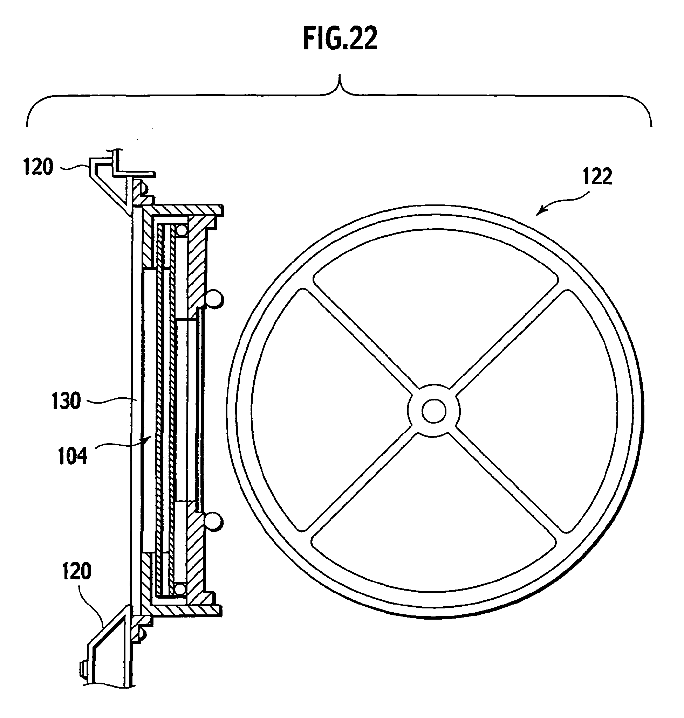

For instance, when the start lever 117 is rotated after the slot machine 101 is given a predetermined value with coins and bills inserted through a coin insertion slot 109 and a bill insertion slot 110, respectively, a first game, described later, is caused to start upon which, for instance, three reels 122 (see FIG. 22) rotatably mounted inside the cabinet 102 rotate for a given time interval and then stop, respectively. The symbols, provided on the respective reels 122, are viewed through display windows 123, 124, 125 located in positions associated with the respective reels 122 of the lower transparent LCD 104. Also, extending across the respective display windows 123, 124, 125 is a payline L. Although there is shown only one payline L in FIG 21, other paylines may be provided so as to obliquely extend across the display windows 123, 124, 125 depending on values given on the game. Also, the amount of value, which the game may be given, may be possible to be selected by BET buttons (1-BET button 111, 2-BET button (spin button) 112, a 3-BET button 113 and 5-BET button 114).

Under circumstances where the reels 122 stop and the symbols, which lie on the payline activated depending on the given value and the selected BET buttons, are aligned with a winning combination, the operation is executed to pay the number of medals depending on each winning combination through a payout opening 115 or to allow a game value depending on the winning to be temporarily stored.

As shown in FIG. 22, further, disposed in a front surface of the lower LCD 104 is a touch panel 130 that is fixedly secured together with the lower LCD 104 onto a front panel 120 of the cabinet 102 by means of suitable fixing segments, respectively.

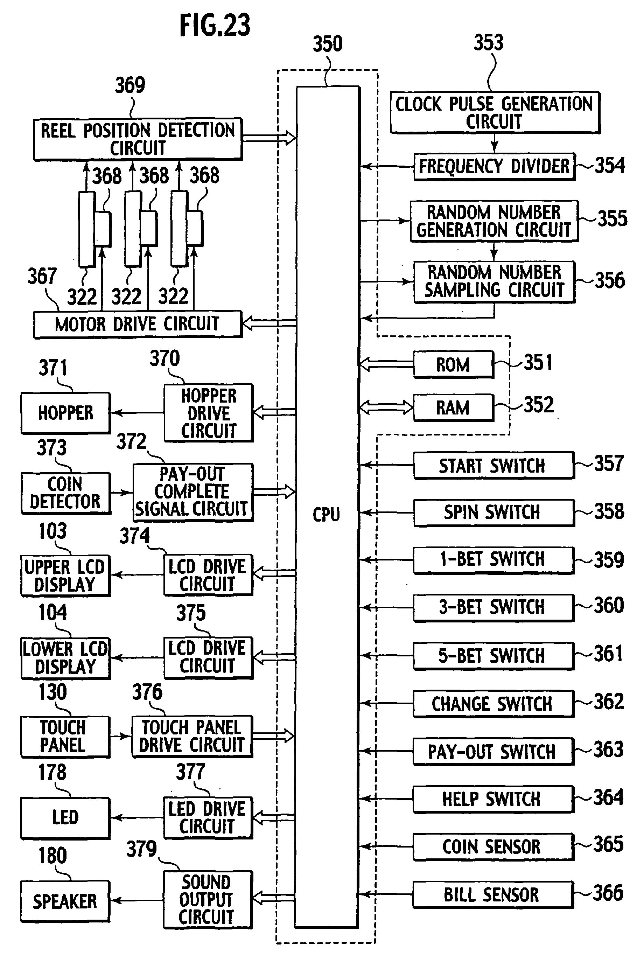

A control system of the slot machine 101 is described with reference to FIG. 23. The control system of the slot machine 101 is generally comprised of a CPU 350 as a core, to which a ROM 351 and a RAM 352 are connected, respectively. The ROM 351 stores game control programs, various effect programs for permitting the upper LCD 103 and the lower LCD 104 to perform various effects with a progress of the game, a drawing table for executing drawings of various winning combinations, other various programs needed for controlling the slot machine 101, and data tables. Further, the RAM 352 plays a role as a storage device in which various data, calculated by the CPU 350, are temporarily stored. The CPU 350 executes a first game based on the various programs stored in the ROM 351, while executing a second game when a specific condition is established during the first game.

Further, connected to the CPU 350 are a clock pulse generation circuit 353, which generates reference clock pulses, a frequency divider 354, a random number generation circuit 355, which generates random numbers, and a random number sampling circuit 356. The random numbers, sampled via the random number sampling circuit 356, are used for various drawings for symbols and the effects for each reel 122. Here, for the symbols to be stopped on the payline L, a range of the random numbers corresponding to the symbols for each reel 122 is set, and the symbol are determined upon referring to a random number value, extracted from a predetermined random number range (for instance, a value ranging from "0" to "255"), for each reel 122 and a "odds drawing table" (not shown) and judging which random number range of the symbols correspond to the extracted random number. Further, connected to the CPU 350 are a start switch 357 disposed in the start lever 117, a spin switch 358 disposed in the spin button (2-BET button) 112, a 1-BET switch 359 disposed in the 1-BET button 111, a 3-BET switch 360 disposed in the 3-BET button 113, a 5-BET switch 361 disposed in the 5-BET button 114, an exchange (change) switch 362 disposed in an exchange button 106, a pay-out switch 363 disposed in a pay-out button 107, and a help switch 363 disposed in a help button 108. The CPU 350 controls in a way to execute various operations associated with the various buttons based on switch signals outputted from the respective switches upon depressions thereof.

Additionally, connected to the CPU 350 are a coin sensor 365 located in the coin insertion slot 109 and a bill sensor 366 located in the bill insertion slot 110. The coin sensor 365 detects the coins inserted through the coin insertion slot 109 and the CPU 350 calculates the number of coins based on a coin detection signal outputted from the coin sensor 365. The bill sensor 366 detects the kind and amount of bills inserted through the bill insertion slot 110 and the CPU 350 calculates the number of coins equivalent to the amount of bills based on a bill detection signal outputted from the bill sensor 366.

Three stepping motors 368 are connected to the CPU 350 via a motor drive circuit 367 by which respective reels 122 are rotatably driven, and a reel position detection circuit 369 is also connected to the CPU 43. With motor drive signals outputted from the CPU 350 to the motor drive circuit 367, the respective stepping motors 368 are rotatably driven. This allows the rotations of respective reels 122.

When this takes place, after the respective reels 122 have started rotating, the numbers of drive pulses supplied to the respective stepping motors 368 are calculated and calculated values are written in predetermined areas of the RAM 352. Further, a reset pulse is outputted from each reel 122 for every one rotation and each reset pulse is inputted to the CPU 350 through the reel position detection circuit 369. Thus, if the reset pulses are inputted to the CPU 350, the calculated values, written in the RAM 352, are cleared to "0". When this occurs, the CPU 350 recognizes a rotational position of the symbol on each reel 122 depending upon the calculated value, associated with the rotational position within one-rotation range of each reel 122, and a symbol table wherein a rotational position, stored in the ROM 351, of each reel 122 and a symbol, formed on an outer periphery of each reel 122, are associated with each other.

A hopper 371 is connected to the CPU 350 via a hopper drive circuit 370. As a drive signal is outputted from the CPU 350 to the hopper drive circuit 370, the hopper 371 pays out a predetermined number of coins from the coin payout opening 115.

Further, a coin detector 373 is connected to the CPU 350 via a pay-out complete signal circuit 372. The coin detector 373 is disposed inside the coin payout opening 115 and, when detected the predetermined number of coins being paid out from the coin payout opening 115, outputs a coin-paid-out detection signal to the pay-out complete signal circuit 372 based on which the pay-out complete signal circuit 372 outputs a pay-out complete signal to the CPU 350.

Furthermore, the upper LCD 104 is connected through an LCD driver circuit 374 to the CPU 350, to which the lower LCD 104 is also connected via an LCD driver circuit 375. Moreover, the touch panel 130 is connected to the CPU 350 through a touch panel drive circuit 376.

In addition, LEDs 178 are connected to the CPU 350 via an LED drive circuit 377. A large number of LEDs 178 are arrayed on a front face of the slot machine 101 and, when performing various effects, controllably lighted by the LED drive circuit 377 in response to drive signals delivered from the CPU 350. Also, a sound output circuit 379 and a speaker 180 are connected to the CPU 350 and the speaker 180 serves to generate various sound effects when performing various effects in response to output signals from the sound output circuit 379.

With the slot machine 101, the rotations of the respective reels 122 cause the symbols, drawn on respective circumferential peripheries, to be displayed in varying modes and stopping the rotation of the reels 122 cause the symbols to stop for display, thereby permitting the first game, which will be described later, to proceed.

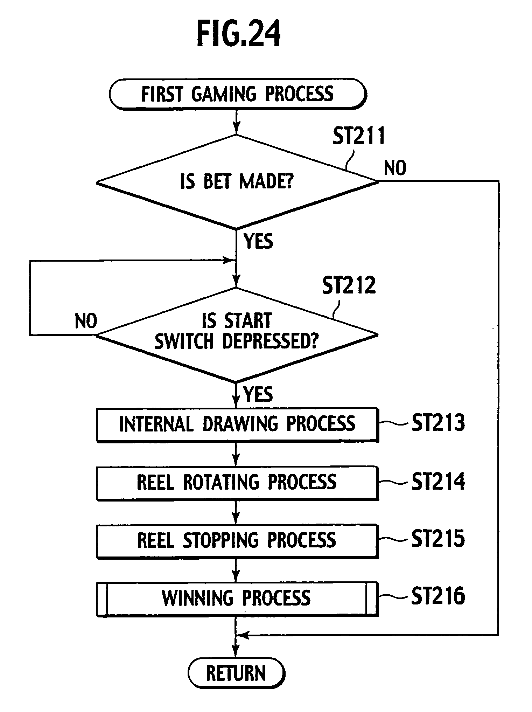

Hereunder, operations in the first game are described with reference to FIG. 24. Initially, discrimination is made whether or not the coins or bills are inserted and the BET is selected (ST211). Upon execution of this operation, the CPU 350 discriminates whether or not a signal, indicative of the operation executed by the player to make the BET, is received. When discrimination is made that the signal is received, the operation proceeds to ST212 and, on the contrary, if discrimination is made that no signal is received, a current subroutine is completed.

It maybe configured such that the BET process is automatically executed when the player inserts the coins or executed for the first time when the player depresses any of the BET buttons (111, 112, 113 and 114).

Next, discrimination is made whether or not the player depresses the start switch 357 commanding to start the first game (ST212). During such operation, the CPU 350 discriminates whether a signal, indicative of the start switch 357 being depressed by the player, is received. When discrimination is made that the signal is received, the operation proceeds to ST213 and, in contrast, if discrimination is made that no signal is received, the operation in step ST212 is executed again.

Then, an internal drawing process is executed (ST213). During such a process, the CPU 350 delivers a command to the random number generation circuit 355 to generate a random number, and the random number generation circuit 355 generates the random numbers in response to the command. Then, the CPU 350 stores internal drawing data, based on the resulting random numbers, in the predetermined areas of the RAM 352. Also, the internal drawing data involves data indicative of combination modes of the symbols that are made possible to be stopped and displayed upon winning on a winning combination.

Also, the present invention may take the form of a structure wherein the random numbers are generated in software (upon executing a predetermined updating of a numeric value on a fixed or non-fixed cycles) by the CPU 350, the programs stored in the ROM 351, and the RAM 352 to allow internal drawing data to be stored in the predetermined areas of the RAM 352 depending on the resulting random numbers. In such a case, the random number generation circuit 355 may be possible to be dispensed with.

Next, a reel rotating process is executed (ST215). During the reel rotating process, the CPU 350 delivers a signal to the motor drive circuit 367 in order to rotate the reels 122. Additionally, during the execution of the first game, the LCD drive circuits 375, 376 allow various effects to be performed on the upper LCD 103 and the lower LCD 104 in suitable fashions, while controllably lighting the LEDs 178 and performing the effects with sound voices using the speaker 180.

Then, a reel stop process is executed (ST214). During such a process, the CPU 350 delivers a signal to the motor drive circuit 367 so as to stop rotating the reels 122.

As a result of the first game, if the combination of the symbols that are stopped corresponds to a predetermined combination, that is, when the symbols on the reels 122 are aligned with a predetermined winning combination, the second game is executed.

Then, the winning process is executed (ST216). During the operation of the wining process, the CPU 350 executes the winning process based on the symbols of the stopped reels 122. After the operation in ST216 is completed, the current subroutine is completed.

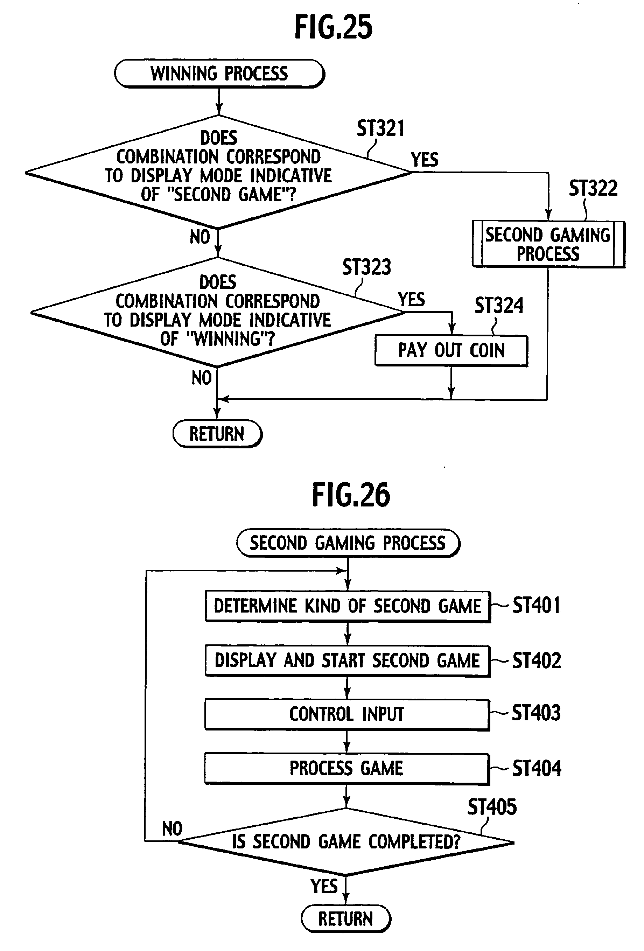

Next, the above winning process is described with reference to FIG. 25.

Initially, discrimination is made whether or not a combination of the symbols on the reels 122 stopped in the first game is involved in the winning mode for "start of the second game" (ST321). That is, during such a process, the CPU 350 discriminates whether or not the combination of the symbols in ST 215 of the subroutine shown in FIG. 24 indicates a shift to the second game.

When discrimination is made that the shift to the second game is indicated, the CPU 350 executes the second gaming process (ST322). The second game can be executed without using any further value and carried out under a rule different from that of the first game. Also, the second game will be described below in detail.

If it is discriminated in ST322 that the combination of the symbols does not indicate the shift to the second game, then, discrimination is made whether or not the combination of the symbols wins (for instance, on "winning combination") (ST323). If discrimination is made that the combination of the symbols corresponds to the winning in the winning mode, the CPU 350 pays out the coins depending on the winning mode (ST324). If it is discriminated in ST323 that the combination of the symbols does not correspond to the winning mode, or if the operations in ST322 or ST324 are executed, the current subroutine is completed. Also, the CPU 350 serves as a first game control device that controls the first game based on the reels 122.

Next, the second gaming process is described with reference to FIG. 26. Hereunder, the CPU 350 serves as a second game control device that controls the second game.

As the second gaming process starts, the CPU 350 determines at least one game from a plurality of second games stored in the ROM 351 in accordance with a predetermined condition or in a random fashion, allowing the determined game to be displayed on the lower LCD 104 (ST401, ST402).

Here, for instance, the second game has the mode shown in FIG. 2 set forth above. That is, in the second game, the player operates tapping the self-character 23 on the touch panel 130 (input control: ST403) and executing predetermined operations, for instance, drawing the magic-circle to attack the enemy 21 (gaming process: ST404) allows the number of available coins to be determined in the second game depending on the degree of attack in success. Here, the particulars related to the control to be inputted by the player have been already described with reference to the first embodiment and, so, are omitted herein. The operations from ST401 to ST404 are continuously executed until the predetermined condition is established, upon which if no condition is satisfied, the operation is routed back to ST401 to restart the second game and if the condition is satisfied, the relevant subroutine is completed (ST405).

Also, the second game may include a play for instance, to draw predetermined letter strings and graphic symbols.

Further, the slot machine 101 of the second embodiment may be configured such that the second game is executed by the upper LCD 103 or the lower LCD 104 or executed over the upper LCD 103 and the lower LCD 104. Also, another alternative may be such that the second game is executed in each of the upper LCD 103 and the lower LCD 104 to be different from each other.

Moreover, the second embodiment is not limited to the slot machine and may include a pachinko gaming machine, a pachi-slot gaming machine and a pin ball, all of which are equipped with touch panels, respectively.

With the gaming machine of the second embodiment, executing various operations on the touch panel in two games, by which the player is apt to be passive, allows the player to participate the game in an aggressive manner, thereby improving the amusement of the game. Further, in such an event, the plural gaming processes can be associated with limited input areas without causing a better arm to be less susceptible like the first embodiment set forth above.

The entire contents of Japanese Patent Application Nos. P2004-69469 with a filing data of March 11, 2004, P2004-69467 with a filing date of March 11, 2004, P2004-69466 with a filing data of March 11, 2004, and P2004-69468 with a filing date of March 11, 2004 are herein incorporated by reference.

Although the invention has been described above by reference to certain embodiments of the invention, the invention is not limited to the embodiments described above and will occur to those skilled in the art, in light of the teachings. The scope of the invention is defined with reference to the following claims.

A gaming machine of the present invention detects positional information that is inputted, recognizes sign information based on detected positional information, makes comparison between at least one preliminarily stored sign data and recognized sign information to discriminate whether or not the sign information and the sign data are correlated, and executes at least one preliminarily stored game processing associated with the sign data when the sign information and the sign data are correlated.

## Claims

1. A gaming machine (11, 101) comprising:
an input device (48) available for inputting positional information;
a positional information acquiring unit (43) adapted to acquire the positional information inputted from the input device;
a sign recognizing unit (43) adapted to recognize sign information based on the positional information acquired by the positional information acquiring unit;
a sign data storage device (46) that stores sign data associated with a predetermined gaming process;
a comparing and discriminating unit (43) adapted to make comparison between the sign information, recognized by the sign recognizing unit, and the sign data, stored in the sign data storage device, and discriminating whether or not the sign information and the sign data are correlated; and
a game processing device (43) that executes a gaming process associated with the sign data when the sign information and the sign data are correlated.

2. The gaming machine according to claim 1, wherein
the sign data storage device stores a plurality of sign data, and each of the sign data permits an associated certain process to be executed; and
the comparing and discriminating unit adapted to select the sign data, having a maximum correlation with the sign information, from the plurality of sign data.

3. The gaming machine according to claims 1 or 2, further comprising a display device (47) adapted to display an image related to the sign information based on the positional information detected by the positional information acquiring unit.

4. The gaming machine according to claim 3, wherein the input device includes a transparent touch panel disposed on the display screen, and the display device adapted to display of an image based on the sign data discriminated by the comparing and discriminating unit that there is a correlation with the sign information.

5. The gaming machine according to any one of claims 2 to 4, wherein a predetermined unique time period determined for input is set for each of the sign data.

6. The gaming machine according to any one of claims 2 to 4, wherein each of the sign data has a unique sign quantity.

7. The gaming machine according to claim 6, wherein the sign quantity is a quantity determined in proportion to a total sum of a length of line segments that comprises the sign data.

8. The gaming machine according to claim 6, wherein the sign quantity is a quantity in proportion to the number of proselytized points contained in the sign data.

9. The gaming machine according to claim 5, wherein the game processing device executes the gaming process in a way to vary effects depending on the predetermined unique time period for input.

10. The gaming machine according to any one of claims 6 to 8, wherein the game processing device executes the gaming process in a way to vary effects depending on the sign quantity.

11. The gaming machine according to any one of claims 1 to 10, wherein the comparing and discriminating unit discriminates a correlation between the sign data, on at least one special point thereof, and the sign information.

12. A program operable by a computer, comprising the steps of:
preliminarily storing sign data correlated with a certain gaming process;
acquiring positional information that is inputted;
recognizing sign information based on the positional information;
making comparison between the sign information and the sign data and discriminating whether or not the sign information and the sign data are correlated; and
executing a gaming process correlated with the sign data when it is discriminated that the sign information and the sign data are correlated;
wherein the steps are executed by the computer.

13. The gaming machine according to claim 1, wherein
the sign data storage device stores a plurality of sign data each of them associated with a plurality of processes, respectively, which are different from each other; and further comprising:
a sign data selecting unit selecting either one of the sign data, correlated with the sign information recognized by the sign information recognizing unit, from the plurality of sign data stored in the sign data storage device; and
wherein the game processing device executes a process correlated with the sign data when the sign data, selected by the sign data selecting unit, and the sign information are correlated.

14. The program according to claim 12, wherein
the storing step further includes a step of preliminarily storing a plurality of sign data each has a one-to-one association with any one of a plurality of processes;
the discriminating step further includes a selecting step for selecting one sign data, correlated with the sign information, from the plurality of sign data; and
the executing step executing a process correlated with the sign data selected in the selecting step.

15. The gaming machine according to claim 1, wherein
the comparing and discriminating unit makes comparison between the sign information, recognized by the sign recognizing unit, and the sign data, stored in the sign data storing device, or an mirror image thereof to discriminate whether or not the sign information and either one of the sign data and the mirror image thereof are correlated; and
the game processing device executes a process associated with the sign data when the sign information and either one of the sign data and the mirror image thereof are correlated.

16. The gaming machine according to claim 18, wherein
the input device includes a transparent touch panel disposed on the display screen, and the display screen is adapted to display an image based on the sign data or the mirror image thereof discriminated by the comparing and discriminating device that there is a correlation with the sign information.

17. The program according to claim 12, wherein
the discriminating step further includes a step of comparing the sign information and the sign data or a mirror image thereof and discriminating whether or not the sign information and the sign data or the mirror image thereof; and
the executing step further includes a step of executing as process associated with the sign data when it is discriminated that the sign information and the sign data or the mirror image thereof are correlated.

18. The gaming machine according to claim 1, wherein
the sign recognizing unit recognizes the sign information, which is available to specify a shape and size of an inputted sign with the input device;
the comparing and discriminating unit makes comparison between the sign information, recognized by the sign recognizing device, and the sign data, stored in the sign data storage device, to discriminate whether or not a shape of the sign information and a shape of the sign data are correlated; and
the game processing device executes a process, associated with the sign data, depending on a size of the inputted sign indicated by the sing information when the sign information and the sign data are correlated.

19. The gaming machine according to claim 21, wherein
the sign data storage device stores a plurality of sign data associated with at least one process, respectively; and
the comparing and discriminating unit select the sign data, having a maximum correlation with the sign information, from the plurality of sign data.

20. The program according to claim 12, wherein
the recognizing step further includes a step of recognizing sign information, which is available to specify a shape and size of an inputted sign, based on the positional information;
the discriminating step further includes a step of making comparison between the inputted sign information and the sign data and discriminating whether or not a shape represented by the sign information and a shape represented by the sign data are correlated; and
the executing step further includes a step of executing a process, associated with the sign data, depending on a size of the inputted sign indicated by the sign information when the shapes of the sign information and the sign data are correlated.

21. The gaming machine according to claim 1, further comprising:
a first game controller (350) which controls a first game; and
a second game controller (350) which triggers a second game when a predetermined outcome appears in the first game;
wherein the second game controller executes the second game while rendering the positional information acquiring unit to acquire the inputted positional information, rendering the comparing and discriminating unit to discriminate whether the acquired positional information is correlated with the sign information recognized by the sign information recognizing unit, the second game controller controls the game processing device to execute a predetermined gaming process when the acquired positional information is correlated with the recognized sign data.
